# EUROPEAN PATENT APPLICATION

(11) **EP 4 779 504 A1**
(43) Date of publication of application: **22.07.2026**
(21) Application number: 25152768.5
(22) Date of filing: 20.01.2025
(51) Int. Cl.: G06F 30/12, G06F 30/27, G06F 111/18, G06F 113/06

(54) **SYSTEM AND METHOD FOR DYNAMICALLY SEGMENTING COMPLEX DIGITAL TWINS FOR RENDERING ONE OR MORE COMPONENTS IN A COMPUTER-SIMULATED ENVIRONMENT**

(71) Applicant: Siemens Aktiengesellschaft, 80333 München (DE)
(72) Inventor: RAJ, Arun, 635110 Hosur, Tamil Nadu (IN); THIYAGARAJAN, Rajaram, 560102 Bangalore, Karnataka (IN)
(74) Representative: HKW Intellectual Property PartG mbB

(57) **Abstract**

Disclosed is a method (500) and system (100) for dynamically segmenting complex digital twins (102, 402) for rendering one or more components (102A, 102B, 102C, 404A, 404B, 404C) of complex digital twin in computer simulated environment. The method comprising identifying, by a processing unit (302), components (102A, 102B, 102C, 404A, 404B, 404C) in complex digital twin (102, 402) associated with assets in industrial environment; determining relationship between identified components based on an impact of behavior of components when operational using an artificial intelligence model; segmenting components of the complex digital twin into one or more segments based on relationships; simulating each of the segments using operating parameters for determining behavior of components in segments for rendering in computer simulated environment; rendering, the one or more segments in the computer simulated environment based on the simulation and one or more requirements of a user (202).

## Description

The present disclosure relates to computer simulated environments, and more particularly relates to a computer-implemented method for dynamically segmenting complex digital twins for rendering one or more components of the complex digital twin in a computer simulated environment.

Industrial environments include plurality of machines or assets in an automated factory, or IoT devices interacting with one another. Industrial environments thus often include multiple interconnected components in signal communication with each other, either directly or across a network. An emerging concept complementing the rapid industrial development is "the industrial metaverse". The industrial metaverse is a next generation of fully immersive three-dimensional collaborative space that integrates multiple technical directions such as digital twin, internet of things, industrial internet, augmented reality, virtual reality, mixed reality, and the like. Metaverse is a virtual universe with shared, 3D virtual spaces where virtual assets can be owned, placed and interacted with. It also allows different users to interact with each other in the collaborative environment. These virtual assets can be simple entities like chair or table, or complex entities like industrial machinery.

For this purpose, a typical IIoT (Industrial Internet of Things) solution in a metaverse would include capturing the real-world data and then rendering the same in the industrial environment in a photorealistic manner to provide an immersive experience to the user. In an industrial environment, such as for manufacturing plants or factory floor, there are numerous machines and corresponding standard operating procedures that the operators/workers need to follow for optimum functioning of the industrial environment. The metaverse simulations can be used in such cases to schedule and train workers/operators using photorealistic rendering of scenarios and immersing them in a virtual world to create real-world experiences. For example, a manufacturing plant hosts a digital workflow for repairing a machine in a VR space. Employees log into the virtual space via VR, meet in a shared space via 3D avatars, and communicate to repair the machine together.

Industrial metaverse provides a framework for experiencing complex machinery in a manner never seen before. By creating interactive and executable digital twins, even hazardous machinery like nuclear power plants can be seen in operation virtually. It also enables remote interactions and drastically increases the scalability by allowing multiple users to connect simultaneously. The challenge lies in the infrastructure requirements for realizing such an experience. The 3D models are large in size, often running into tens of GBs and these may need to be streamed over the internet. Making them interactive and executable may require hundreds of API integrations. For small to medium sized machinery like CNC machines, the overheads are still relatively low. However, for large complex machinery like wind turbines, power plants and steel plants, the compute, storage and bandwidth requirements can be extremely high. This can also result in high latency and affect the user experience in addition to impacting the sustainability of the solution.

However, for such large machinery, users are often interested in specific components and not the entirety of the machine. For example, if the condenser in a power plant develops a fault, a remote expert diagnosing the fault may not be interested in the electric generator. Also, it might not be practical to view the entirety in a single perception due to the visibility range of human eye. Furthermore, rendering these 3D models require high-speed networking (5G/6G) and high-configuration GPU servers that are resource and energy intensive and thereby increasing carbon footprint of such virtual environments.

In the light of the above, there exists a need to provide a computer-simulated industrial environment and a method for dynamically segmenting complex digital twins for rendering one or more components of the complex digital twin in a computer simulated environment.

Therefore, it is an object of the invention to provide a computer-implemented method for dynamically segmenting complex digital twins for rendering one or more components of the complex digital twin in a computer simulated environment.

The term "industrial environment" as used herein refers to any environment comprising one or more assets interacting therein. The term industrial environment may refer to any building such as a factory or any type of manufacturing facility, an office building or the like, which may be populated with various entities. Herein, the term "industrial environment" refers to the whole of machineries or parts thereof which cooperate to allow a production process of any kind to be carried out. Example of industrial environment may be any industrial set-up with a plurality of assets such as a power plant, wind farm, power grid, manufacturing facility, process plants and so on. Although the present disclosure has been described generally in terms of the industrial environment being some form of a factory floor, the term "industrial environment" as used in the preferred embodiments and claims according to the present disclosure should be understood broadly to include not only factory floors, but also other indoor facilities and buildings such as hospitals, office spaces, apartments, complexes, schools, training centers, and so forth. The term "industrial environment" may also include other outdoor facilities such as a parking lot, a traffic junction, and vehicles such as airplanes, ships and trucks.

Throughout the present disclosure, the term "one or more assets" as used herein refers to any device, system, instrument, or machinery manufactured or used in an industry that may be employed for performing an operation. Example of assets include any machinery in an industrial environment or technical installation/facility such as motors, gears, bearings, shafts, switchgears, rotors, circuit breakers, protection devices, remote terminal units, transformers, reactors, disconnectors, gear-drive, gradient coils, magnets, radio frequency coils etc. The one or more assets may also include automated systems such as automated robots, semi-automated robots, remote-controlled robots, robotic arms, etc. that are employed in the industrial environment to perform an operation or task. Exemplary technical systems include turbines, large drives, Magnetic Resonance Imaging (MRI) scanner, etc. Example facility/technical installation may be a complex industrial set-up with a plurality of assets such as a power plant, wind farm, power grid, manufacturing facility, process plants and so on. In view of the present invention, the industrial environment may be comprised of simple assets and complex assets. The simple assets in the industrial environment are characterized by straightforward design and less complexity of processing of the images acquired. In contrast, the complex assets are characterized by complex designs and higher complexity of processing of the complex asset. In an example, simple assets are boxes, tools, pumps, sensors, operators, etc. and the complex assets are turbines, motors, CNC machines, cranes, etc.

Throughout the present disclosure, the term "digital twin/virtual asset" as used herein refers to digital copy of a physical item (e.g., a real machine) that is created to support data access, command and control, remote configuration, as well as simulation and analytics. A virtual asset is commonly created simultaneously with the real devices and systems, such as processing equipment and sensors in the facility. Once created by a specific vendor for their own specific equipment, the virtual asset can be used to represent the machine in a digital representation of a real-world system. The DT is created such that it is identical in form and behavior to the corresponding machine. virtual assets may be supported by the vendors' own IIoT infrastructure. Thus, each virtual asset is associated with one and only one asset. A customer deploying IIoT may thus end up having many such virtual assets deployed on a wide variety of infrastructures because IIoT vendors generally host their solutions on a variety of different cloud platforms (e.g. Microsoft AZURE, Amazon AWS, their own- or third-party data center), and may use a wide variety of open source and other components to create their digital twin/ virtual asset solutions. For the present invention, complex digital twins correspond to complex assets as described above.

Throughout the present disclosure, the term "computer simulated environment" as used herein refers to three-dimensional (3D) representation of a real or physical world. It can be understood as a virtual world. The computer-simulated environment is accessible by a user, i.e., it is accessible from the real/physical world. This comprises data exchange between the computer-simulated environment and the real/physical world. In particular, the computer-simulated environment can be understood as the "metaverse" or the "industrial metaverse". It is also possible to interact with the computer-simulated environment, i.e., to influence or use processes, components and/or functions in the computer-simulated environment. Therefore, processes in the computer-simulated environment may have direct influence on processes in the real/physical world, e.g., by modelling control processes virtually.

For example, it is possible that a user can access the computer-simulated environment via an interface, e.g., a virtual reality (VR) or augmented reality (AR) interface. The counterpart of the computer-simulated environment does not necessarily have to exist but can be for example a 3D model. It is also possible that physical forces and phenomena, e.g., gravity, are represented in a different way in the computer-simulated environment than in the real world, e.g., gravitational acceleration. For the purpose of this invention, the metaverse is comprised of one or more animated scenes being rendered corresponding to the plurality of assets interacting in the industrial environment.

The metaverse may comprise a plurality of computer-simulated components. The computer simulated components can for example be understood as a representation, in particular a 3D representation, of a real or physical component. A component can for example be a room, a building, an item, or an object. The computer-simulated component can have different functionalities/features, e.g., an access interface. The computer-simulated component further comprises data that are component-specific, e.g., sensor data of a virtual sensor, that can be retrieved for example via the access interface. An access to a computer-simulated component can for example comprise usage, modification, connection to other computer-simulated components, etc. The computer-simulated component can interact with the computer-simulated environment. For the purpose of this invention, the computer-simulated component may be one or more entities being rendered in the computer simulated collaborative environment or metaverse.

The metaverse can be realized by a hosting environment. The hosting environment can be for example be implemented as a cloud environment, an edge-cloud environment and/or on specific devices, e.g., mobile devices.

The method comprises importing, by a processing unit, a simulation of one or more virtual assets into the computer-simulated environment. The virtual assets comprise 3-dimensional computer models of assets that are implemented in the industrial environment. The processing unit may retrieve the 3-dimensional computer models of the assets and renders a simulation which is imported into the computer-simulated environment.

Throughout the present disclosure, the term "user" as used herein refers to any person, avatar, virtual assistant, or any other device or system configured to raise request to the apparatus for viewing the complex digital twins and interacting therewith.

The object of the present invention is achieved by a system for dynamically segmenting complex digital twins for rendering one or more components of the complex digital twin in a computer simulated environment. The method comprises identifying the one or more components in the complex digital twin associated with assets in an industrial environment, wherein the complex digital twins are a virtual replica of the assets. The method comprises determining a relationship between the one or more identified components based on an impact of a behavior of the one or more components when operational using an artificial intelligence model. The method comprises segmenting the one or more components of the complex twin into one or more segments based on the determined relationships, wherein the one or more segments comprises a subset of the one or more components of the complex digital twin that are functionally related to each other. The method comprises simulating each of the one or more segments using a set of operating parameters for determining the behavior of the one or more components in the segments for rendering in the computer simulated environment. The method comprises rendering the one or more segments in the computer simulated environment based on the simulation and one or more requirements of the user viewing the complex digital twin in the computer simulated environment.

According to an embodiment, the method of determining relationship between the one or more identified components is based on relationship graph generated from the one or more components and functional relationship therebetween.

According to an embodiment, the method of segmenting the one or more components of the complex twin into one or more segments based on the determined relationships comprises identifying the one or more primary segments from the one or more segments based on at least one of: a profile of the user, one or more requirements of the user, viewing angle of the user, and interaction of the user with the digital twin.

According to an embodiment, the method further comprises observing a behavior of segments other than the primary segments to be rendered when a particular simulation is running, and determining one or more secondary segments based on a behavioral variation that are impacted from the simulation running in the primary segments.

According to an embodiment, the method further comprises defining access to one or more components of the complex digital twin based on predefined user roles in the industrial environment.

According to an embodiment, the method of rendering the one or more segments in the computer simulated environment comprises generating an accurate representation of the one or more segments based on primary segments, secondary segments, and an access level of the user profiles and rendering the accurate representation for the users to view the one or more components in the computer simulated environment.

The object of the invention is also achieved by an apparatus for dynamically segmenting complex digital twins for rendering one or more components of the complex digital twin in the computer simulated environment. The apparatus comprises one or more processing units, memory communicatively coupled to the one or more processing units. The memory comprises a module stored in the form of machine-readable instructions executable by the one or more processing units. The module is configured to perform the aforementioned method steps.

The object of the invention is also achieved by a system for dynamically segmenting complex digital twins for rendering one or more components of the complex digital twin in the computer simulated environment. The system comprises a computer simulated collaborative environment hosting a plurality of virtual assets, wherein each of the virtual assets correspond to one or more assets in an industrial environment. The apparatus is communicatively coupled to the computer simulated collaborative environment. The apparatus is configured for dynamically segmenting complex digital twins for rendering one or more components of the complex digital twin in the computer simulated environment according to the aforementioned method steps.

The object of the invention is also achieved by a computer program product comprising machine readable instructions, that when executed by one or more processing units, cause the one or more processing units to perform the aforementioned method steps.

The object of the present invention is further achieved by a computer readable medium on which program code sections of a computer program are saved, the program code sections being loadable into and/or executable in a system to make the system execute the method steps described above when the program code sections are executed in the system. This summary is provided to introduce a selection of concepts in a simplified form that are further described below in the following description. It is not intended to identify features or essential features of the claimed subject matter. Furthermore, the claimed subject matter is not limited to implementations that solve any or all disadvantages noted in any part of this invention.

The present invention is further described hereinafter with reference to illustrated embodiments shown in the accompanying drawings, in which:
- FIG 1: illustrates a block diagram of a system for dynamically segmenting complex digital twins for rendering one or more components of the complex digital twin in a computer simulated environment, according to an embodiment of the present invention;
- FIG 2: an exemplary illustration of a user viewing the one or more components in the computer simulated environment, according to an embodiment of the present invention;
- FIG 3: illustrates a block diagram of an exemplary apparatus for dynamically segmenting complex digital twins for rendering one or more components of the complex digital twin in a computer simulated environment, according to an embodiment of the present invention;
- FIG 4: illustrates an architecture of the system for dynamically segmenting complex digital twins for rendering one or more components of the complex digital twin in a computer simulated environment, according to an embodiment of the present invention; and
- FIG 5: illustrates a flowchart of a method for dynamically segmenting complex digital twins for rendering one or more components of the complex digital twin in a computer simulated environment, according to an embodiment of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

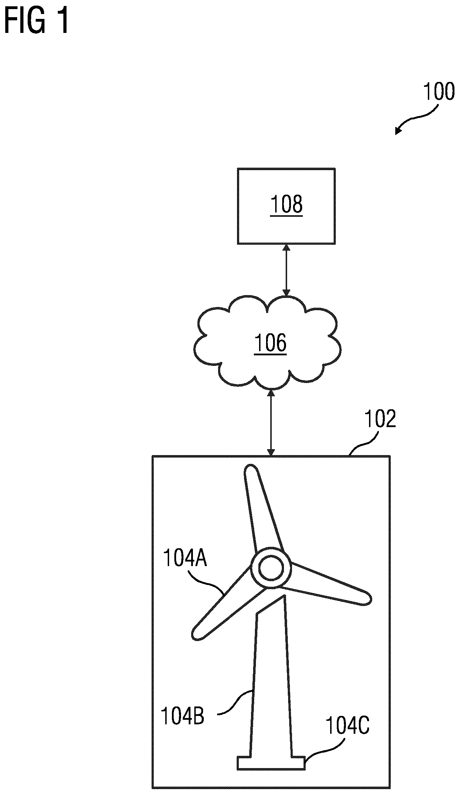

FIG 1 is a block diagram of a system 100 for dynamically segmenting complex digital twins for rendering one or more components (104A, 104B, 104C) of the complex digital twin (102) in a computer simulated environment (not shown). The system 100 comprises a computer simulated environment, one or more virtual assets (102) rendered in the computer simulated environment, an apparatus 108 communicating over a communication network 106. The computer simulated environment 102 is three-dimensional (3D) representation of a real or physical world. It can be understood as a virtual world representing one or more virtual assets (102) of the real-world assets in an industrial environment. The term "industrial environment" as used herein refers to any industrial environment comprising one or more assets interacting therein. The term industrial environment may refer to any building such as a factory or any type of manufacturing facility, an office building or the like, which may be populated with various assets. Herein, the term "factory" or industrial environment refers to the whole of machineries or parts thereof which cooperate to allow a production process of any kind to be carried out. Example of factory may be any industrial set-up with a plurality of assets such as a power plant, wind farm, power grid, manufacturing facility, process plants and so on. Although the present disclosure has been described generally in terms of the industrial environment being some form of a factory floor, the term "industrial environment" as used in the preferred embodiments and claims according to the present disclosure should be understood broadly to include not only factory floors, but also other indoor facilities and buildings such as hospitals, office spaces, apartments, complexes, schools, training centers, and so forth. The term "industrial environment" may also include other outdoor facilities such as a parking lot, a traffic junction, and vehicles such as airplanes, ships and trucks.

The term "complex digital twins" or "one or more virtual assets" (102) refers to specific objects, elements, components, or subjects in an industrial environment. In an example, the one or more digital twins (102) may be digital representation of assets, devices, machinery, robots, equipment, assembly lines, conveyors, motors, pumps, compressors, or any other mechanical, electrical, or electronic equipment, workers, operators, supervisors, in the industrial environment. In an example, the industrial environment is an office building, the one or more virtual assets (102) maybe digital representation of desks, chairs, tables, cabinets, shelves, partitions, workstations, conference room furniture, lighting fixtures, or any other furniture or fixtures typically found in an office environment. Further, the one or more assets may be equipment, or systems used in office operations, including computers, printers, scanners, copiers, telephones, projectors, audiovisual systems, networking devices, or any other technological or electronic devices commonly used in an office setting. In another example, the facility is an airplane under maintenance, the one or more assets maybe physical framework, body, or fuselage of the airplane, including wings, tail sections, landing gear, engine nacelles, cockpit, cabin, doors, windows, and any other structural components that contribute to the overall form and integrity of the aircraft, jet engines, turboprops, propellers, fuel systems, exhaust systems, thrust reversers, or any other elements involved in generating and controlling the aircraft's propulsion, electronic systems and instruments used for aircraft navigation, communication, monitoring, and control, including flight control systems, flight management systems, autopilot systems, navigation systems, communication systems, radar systems, or any other electronic devices or subsystems installed on the aircraft, seating arrangements, overhead compartments, lavatories, galley equipment, lighting systems, entertainment systems, safety equipment, passengers, pilots, crew members and so forth.

In the context of the present invention, the digital twins may be comprised of simple digital twins and complex digital twins. The simple digital twins are characterized by straightforward design and less complexity of processing of the images acquired. In contrast, the complex digital twins are characterized by complex designs and higher complexity of processing of the complex asset. In an example, simple digital twins correspond to simple assets like boxes, tools, pumps, sensors, operators, etc. and the complex digital twins correspond to complex assets like turbines, motors, CNC machines, cranes, etc. The complex digital twins are comprised of one or more components. The one or more components of the digital twin correspond to functional components of the digital twin in the real-world, wherein the functional component is a component integral to the asset. The functional components of the digital twins are the parts of the asset that are integral part of the digital twin and are operated to have a function in the digital twin. In an example, in a CNC machine digital twin, the one or more components are spindle digital twin, axle digital twin, servo motor digital twin, ball screw digital twin etc. In another example, in a windmill digital twin, the one or more components are rotor blades, rotor, hub, nacelle, gear box, tower, foundation, yaw system, brake system, wind vane, and control system. In another example, in a turbine digital twin, the one or more components are turbine shaft, blades, casing, nozzles, stator, bearings, control system, exhaust system, coupling, cooling system, lubrication system, heat exchanger, and compressor.

The one or more virtual assets (102) are 3-dimensional models of assets that are implemented in the industrial environment. The rendered 3-dimensional models of the assets are imported as a simulation in the computer simulated environment. The computer-simulated environment is accessible by a user, i.e., it is accessible from the real/physical world. In particular, the computer-simulated environment can be understood as the "metaverse". It is also possible to interact with the computer-simulated environment, i.e., to influence or use processes, components and/or functions in the computer-simulated environment. The user or the avatar may interact with the virtual assets rendered in the metaverse.

For example, it is possible that a user can access the computer-simulated environment 102 via an interface, e.g., a virtual reality (VR) or augmented reality (AR) interface. For the purpose of this invention, the metaverse is comprised of one or more animated scenes being rendered corresponding to the plurality of assets interacting in the industrial environment. The metaverse may comprise a plurality of computer-simulated components. The computer simulated components can for example be understood as a representation, in particular a 3D representation, of a real or physical component. A component can for example be a room, a building, an item, or an object. The computer-simulated component can have different functionalities/features, e.g., an access interface. The metaverse can be realized by a hosting environment. The hosting environment can be for example be implemented as a cloud environment, an edge-cloud environment and/or on specific devices, e.g., mobile devices.

In one embodiment, the apparatus 108 is deployed in a cloud computing environment. As used herein, "cloud computing environment" refers to a processing environment comprising configurable computing physical and logical resources, for example, networks, servers, storage, applications, services, etc., and data distributed over the network, for example, the internet. The cloud computing environment provides on-demand network access to a shared pool of the configurable computing physical and logical resources. The apparatus 108 may include a processing unit 302, and a module for dynamically segmenting complex digital twins for rendering one or more components of the complex digital twin in a computer simulated environment.

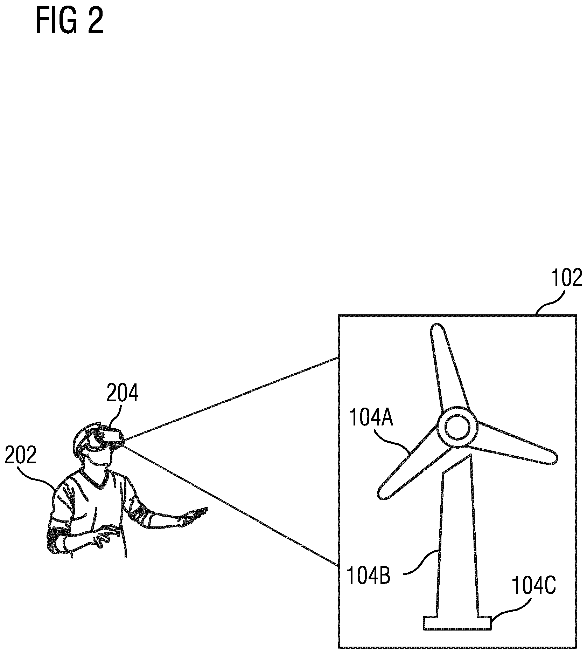

FIG 2 is an exemplary illustration of a user 202 viewing the one or more components in the computer simulated environment 102, according to an embodiment of the present invention. As maybe seen, the user 202 is equipped with a wearable device 204 configured for visualization of the simulation of one or more virtual assets (104a-104n) in the computer simulated environment 102. In an example, the wearable device 204 comprises a display module that presents visual information to the user, rendering one or more components of the complex digital twin based on primary segments, secondary segments and access level of the user 202, in a realistic and immersive manner. The display module may include a high-resolution screen, holographic display, augmented reality (AR) glasses, or any other suitable technology for visually presenting virtual content to the user. Additionally, the wearable device 204 incorporates a tracking system to capture the user's movements and gestures, allowing for real-time interaction and navigation within the metaverse. The tracking system may utilize sensors, cameras, motion trackers, or any other suitable means of capturing and interpreting user movements. Furthermore, the wearable device 204 includes connectivity features to facilitate communication and data exchange with the metaverse infrastructure. These features may include wireless communication capabilities, such as Wi-Fi, Bluetooth, or cellular connectivity, enabling the wearable device 204 to connect to the metaverse platform, retrieve asset data, and transmit user actions or preferences. The wearable device 204 may also incorporate input mechanisms, such as touch-sensitive surfaces, buttons, voice recognition, or motion sensors, allowing users to provide commands, make selections, or manipulate virtual assets within the metaverse environment. The wearable device 204 for visualizing complex assets in the metaverse is designed to enhance the user's experience and immersion in the virtual world. It enables users to perceive, interact with, and navigate through virtual assets, objects, and environments seamlessly, thereby providing a novel and immersive way to explore and visualize digital content within the metaverse.

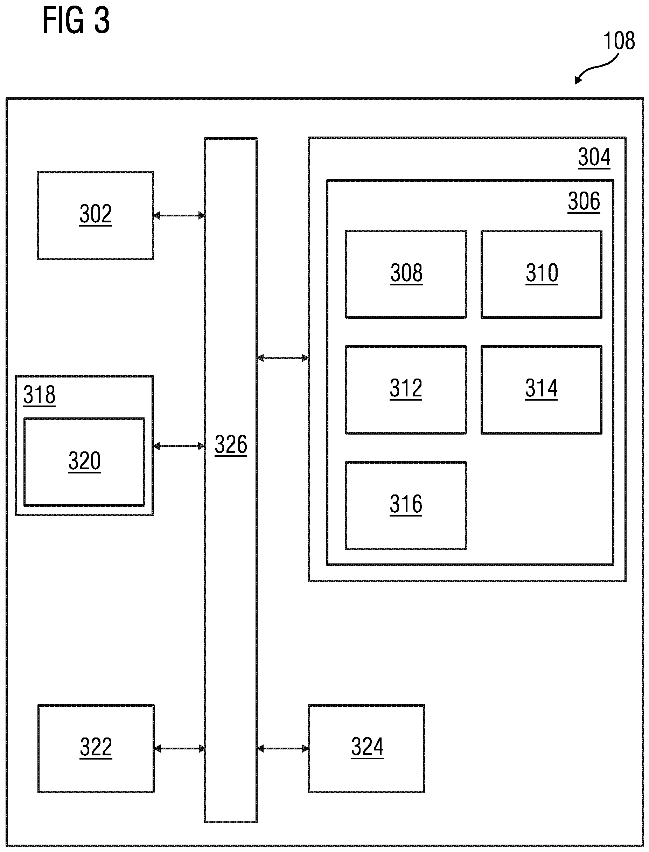

FIG 3 is a block diagram of an exemplary apparatus 108 for dynamically segmenting complex digital twins 103 for rendering one or more components (104-1 to 104-N) of the complex digital twin 103 in a computer simulated environment 102, according to an embodiment of the present invention. In an exemplary embodiment, the apparatus 108 is communicatively coupled to the computer simulated environment 102 rendering one or more components 104-1 to 104-N of the complex digital twins 103.

The apparatus 108 may be a personal computer, a laptop computer, a tablet, a server, a virtual machine, and the like. The apparatus 108 includes a processing unit 302, a memory unit 304 comprising a module 306, a storage unit 318, an input unit 322, a display unit 324 and a bus 326.

The processing unit 302 as used herein means any type of computational circuit, such as, but not limited to, a microprocessor, microcontroller, complex instruction set computing microprocessor, reduced instruction set computing microprocessor, very long instruction word microprocessor, explicitly parallel instruction computing microprocessor, graphics processor, digital signal processor, or any other type of processing circuit. The processing unit 302 may also include embedded controllers, such as generic or programmable logic devices or arrays, application specific integrated circuits, single-chip computers, and the like.

The memory unit 304 may be non-transitory volatile memory and/or non-volatile memory. The memory may be coupled for communication with the processing unit 302, such as being a computer-readable storage medium. The processing unit 302 may execute instructions and/or code stored in the memory unit 304. A variety of computer-readable instructions may be stored in and accessed from the memory. The memory unit 304 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

In the present embodiment, the memory unit 304 includes the module 306 stored in the form of machine-readable instructions on any of the above-mentioned storage media and may be in communication to and executed by the processing unit 302. When the machine-readable instructions are executed by the processing unit 302, the module 306 causes the processing unit 302 to render the one or more segments in the computer simulated environment 102 based on the simulation and one or more requirements of the user 202 viewing the complex digital twin 103 in the computer simulated environment 102 .

The module 306 further comprises a component identification 308, relationship identification module 310, segmentation module 312, simulation module 314, and rendering module 316.

The component identification module 308 is configured for identifying the one or more components in the complex digital twin associated with assets in an industrial environment. The component identification module 308 is configured for identifying one or more components using segmentation techniques. The component identification module 308 employs a set of methods and processes used to partition or divide the complex digital twin into distinct and meaningful regions or individual components. The primary function of the component identification module 308 is separate areas of interest within the complex digital twin into individual components based on their functionality. The component identification module 308 using segmentation techniques includes several steps of boundary detection, region classification, feature extraction, clustering or classification, region growing and splitting, morphological operations etc. to segment the complex digital twins into individual components.

The relationship identification module 310 is configured for identifying a relationship between the one or more identified components based on an impact of a behavior of the one or more components when operational using an artificial intelligence model. The relationship identification module 310 is configured for generating a relationship graph from the one or more components and functional relationship therebetween. The relationship identification module 310 is configured for generating a relationship graph based on behaviors of each of the components and an impact of each component on one another when the digital twin is operational.

The segmentation module 312 is configured for segmenting the one or more components of the complex digital twin into one or more segments based on the determined relationships from the relationship identification module 310. The segmentation module 312 is configured for identifying a subset of the one or more components of the complex digital twin that are functionally related to each other. The segmentation module 312 is configured for identifying one or more primary segments from the one or more segments based on at least one of: a profile of the user, one or more requirements of the user, viewing angle of the user, and interaction of the user with the digital twin. The segmentation module 312 is configured for determining one or more secondary segments based on a behavioral variation that are impacted from the simulation running in the primary segments.

The simulation module 314 is configured for simulating each of the one or more segments using a set of operating parameters for determining the behavior of the one or more components in the segments for rendering in the computer simulated environment. The simulation module 314 is configured for identifying a set of operating parameters and then executing the digital twin on the operating parameters.

The rendering module 316 is configured for rendering the one or more segments in the computer simulated environment based on the simulation and one or more requirements of the user viewing the complex digital twin in the computer simulated environment. The rendering module 316 is configured for generating an accurate representation of the one or more segments based on primary segments, secondary segments, and an access level of the user profiles.

The processing unit 302 is configured for performing all the functionality of the module. The processing unit 302 is configured for identifying the one or more components in the complex digital twin associated with assets in an industrial environment, wherein the complex digital twins are a virtual replica of the assets. The processing unit 302 is configured for determining a relationship between the one or more identified components based on an impact of a behavior of the one or more components when operational using an artificial intelligence model. The processing unit 302 is configured for segmenting the one or more components of the complex twin into one or more segments based on the determined relationships, wherein the one or more segments comprises a subset of the one or more components of the complex digital twin that are functionally related to each other. The processing unit 302 is configured for simulating each of the one or more segments using a set of operating parameters for determining the behavior of the one or more components in the segments for rendering in the computer simulated environment. The processing unit 302 is configured for rendering the one or more segments in the computer simulated environment based on the simulation and one or more requirements of the user viewing the complex digital twin in the computer simulated environment.

The storage unit 318 comprises the database 320. The database may be configured for storing complex digital twins, relationship graphs, one or more components, simulation parameters and so forth. The database 320 may be provided using various types of storage technologies, such as solid-state drives, hard disk drives, flash memory, and may be stored in various formats, such as relational databases, non-relational databases, flat files, spreadsheets, and extended markup files, etc.

The input unit 322 may provide ports to receive input from input devices such as keypad, touch-sensitive display, camera (such as a camera receiving gesture-based inputs), etc. capable of receiving set of requirements for rendering one or more segments of the complex digital twin in the computer simulated environment. The display unit 324 may provide ports to output data via output device with a graphical user interface for displaying one or more segments of the complex digital twins in the computer simulated virtual environment. The bus 326 acts as interconnection between the processing unit 302, the memory 304, the storage unit 318, the input unit 322, and the display unit 324.

Those of ordinary skilled in the art will appreciate that the hardware depicted in FIG 3 may vary for particular implementations. For example, other peripheral devices such as an optical disk drive and the like, Local Area Network (LAN)/ Wide Area Network (WAN)/ Wireless (e.g., Wi-Fi) adapter, graphics adapter, disk controller, input/output (I/O) adapter also may be used in addition to or in place of the hardware depicted. The depicted example is provided for the purpose of explanation only and is not meant to imply architectural limitations with respect to the present disclosure.

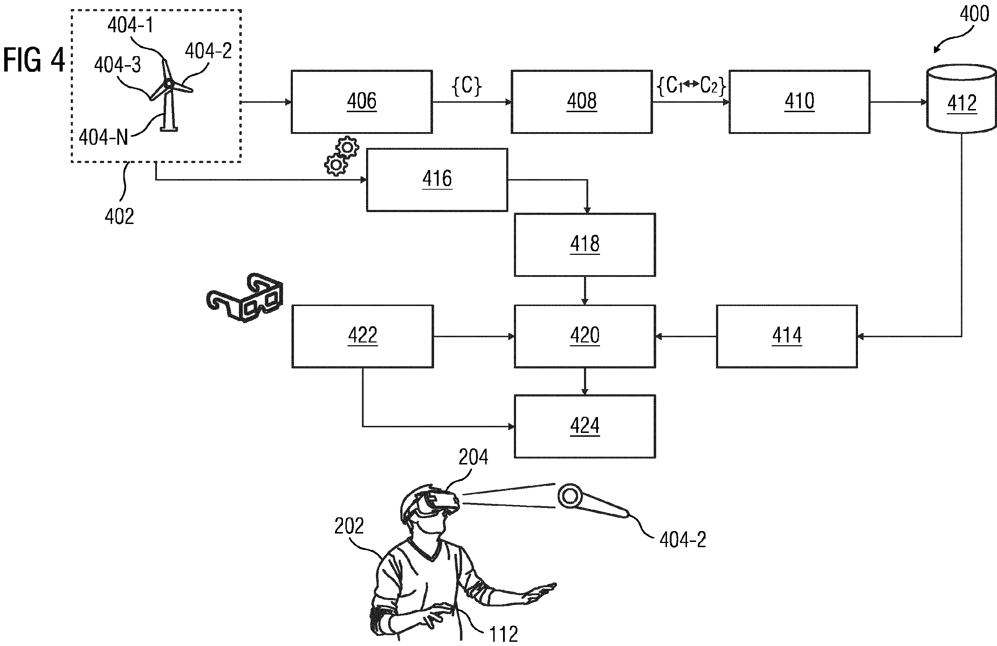

FIG 4 illustrates an architecture of the system 400 for dynamically segmenting complex digital twins for rendering one or more components of the complex digital twin in a computer simulated environment, according to an embodiment of the present invention.

Let us consider an example of an engine failure in one of blades of a windmill. The digital twin model of the windmill is shown as 402. The ground technician requests for remote expert support - in this scenario, both the technician and the expert would be observing the components of the faulty blade. Hence, it is necessary to render only the faulty blade and related components. The component identification module 406 is configured for identifying the one or more components 404-1 to 404-N in the complex digital twin 402. In a wind turbine, the different components 404-1 to 404-N can be hub, rotor blades, drive shaft, generator, yaw motor, brake, etc. In an industrial model, the different components may be already identified and grouped. Hence, the component identification module 406 focuses on identifying the important components by cross-referencing with the user or architecture document. As shown here, the component identification module 406 identifies the different components of the windmills as first blade 404-1, second blade 404-2, third blade 404-3, and the tower as 404-N. The output of the component identification module 406 is fed to the relationship identification module 408. The relationship identification module 408 is configured for identifying the relations between the identified one or more components 404-1 to 404-N. Essentially, for each component, the relationship identification module 408 discovers the other components which control or influence its behaviour. For example, the brake has an effect on the drive shaft in a wind turbine (if the brake is applied, the shaft cannot rotate). In an example, the relationship identification module 408 is an artificial intelligence model, initially trained with human expert input. The output of the relationship identification module 408 is fed to the relationship graph creation module 410. The relationship graph creation module 410 is configured for creating a directed graph containing all the relationships between all the components 404-1 to 404-N from the relationship graph. The relationship graph is then stored in the database 412. The output from the database 412 is input into the functional segmentation module 414. The functional segmentation module 414 is configured for decomposing complex models to segments based on functionality. For example, in a windmill 402, we can have one segment for each of the blades, one for the yaw motor, etc. The segments consist of interdependent components from the entire complex digital twin model. The simulation engine 416 is configured for - providing the simulation capabilities to virtually execute different operating parameters in the machinery. For complex simulations, multiple components may be in involved which can span across multiple functional segments. In such a scenario, all the functional segments will need to be rendered in their entirety. But for other simulations that tests specific functional units, partial rendering would be sufficient for the analysis. The dynamic segment discovery module 418 is configured for determining the different functional segments involved. Based on different stages in the simulation, different functional segments that are involved are identified (thus help build specific perception), for a given simulation composed of a set of components. Hence, dynamic segment discovery module 418 performs this discovery in a dynamic manner by observing the behavioural variations (including visual, physical, timing, etc) of the different functional segments. Further, the user profile management module 422 is configured for managing access rights of different users. Different users may have different access levels and interests. For example, a motor technician will only be interested in motors and related components. The UPM module manages the different kinds of user profiles and their access levels. The perception generation module 420 is configured for generating an accurate representation of the segments to be rendered. Based on the functional segments, dynamic segments discovery and user profile, the correct perception to be rendered is generated. A perception is a subset of the complete model which can represent a simple/complex functional component(s). For example, here for the maintenance engineer or the user 202, the rotor blade 404-2 is rendered for viewing on the user device 204. The rendering module 424 is configured for rendering the accurate representation to the user 202.

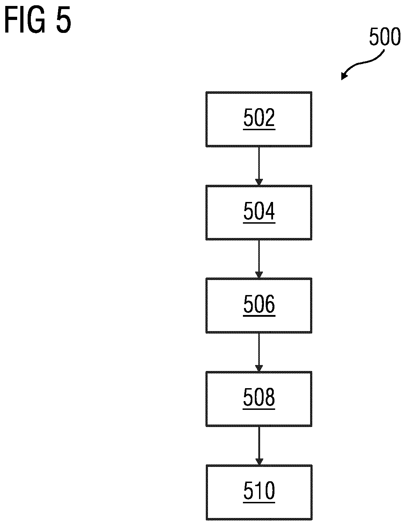

FIG. 5 is a flowchart of a method (represented by numeral 500) for dynamically segmenting complex digital twins for rendering one or more components of the complex digital twin in a computer simulated environment. The complex digital twins are comprised of one or more components. The one or more components of the digital twin correspond to functional components of the digital twin in the real-world, wherein the functional component is a component integral to the asset. The functional components of the digital twins are the parts of the asset that are integral part of the digital twin and are operated to have a function in the digital twin. In an example, in a CNC machine digital twin, the one or more components are spindle digital twin, axle digital twin, servo motor digital twin, ball screw digital twin etc. In another example, in a windmill digital twin, the one or more components are rotor blades, rotor, hub, nacelle, gear box, tower, foundation, yaw system, brake system, wind vane, and control system. In another example, in a turbine digital twin, the one or more components are turbine shaft, blades, casing, nozzles, stator, bearings, control system, exhaust system, coupling, cooling system, lubrication system, heat exchanger, and compressor. The one or more components are dynamically segmented based on a requirement of the user and then rendered to the user for viewing and interacting. It will be appreciated that an entirety of the complex digital twin is not rendered to the user, but relevant segments from the complex digital twin are simulated and rendered as per the requirement of the user.

At step 502, the one or more components in the complex digital twin associated with assets are identified in an industrial environment. The complex digital twins are a virtual replica of the assets. The one or more components are identified from the complex digital twins based on the structure of the real-world assets as defined by the user. In an example, the complex digital twins are divided into individual one or more components using one or more machine learning algorithms. The complex digital twin is divided into further individual components using a set of methods and processes used to partition or divide the complex digital twin into distinct and meaningful regions or individual components. In an example, the method comprises employing segmentation techniques to identify different components of the complex digital twin. The method comprises separating areas of interest within the complex digital twin into individual components based on their visual characteristics. These visual characteristics can include color, intensity, texture, shape, or other properties. For segmenting the complex digital twin into individual components, the particular complex digital twin is identified, and boundaries are determined amongst different regions within the 3D digital twin model. This helps to precisely define the extent of each segment. Further, pixels or small regions of the image are grouped into small regions or classes based on the visual attributes of each of the individual components. Pixels or regions of the same class are considered part of the same segment. Furthermore, in order to define different components in the complex digital twin, the relevant features or descriptors such as color histograms, texture patterns or gradient information is extracted. Once the different bounding boxes are clearly defined, the method further comprises applying the one or more machine learning models such as classification and clustering algorithms to group similar regions together and assign classification labels to each component. In an example, in a CNC machine digital twin, the one or more components are spindle digital twin, axle digital twin, servo motor digital twin, ball screw digital twin etc. These components are identified by applying the segmentation algorithms on the CNC machine digital twin.

At step 504, a relationship between the one or more identified components is identified based on an impact of a behavior of the one or more components when operational using an artificial intelligence model. The artificial intelligence model is configured for determining a behavior of each of the one or more components and then determining an impact of each of the components on one other. In one example, the artificial intelligence model is configured for determining all the components that are related to one another physically. In another example, the artificial intelligence model is configured for determining all the components that are related to one another behaviorally. In an embodiment, the relationship between the one or more identified components is determined based on relationship graph generated from the one or more components and functional relationship therebetween. It is to be noted that the relationship graph is generated from technical documentation of corresponding complex digital twins, and a behavior of each of the components when simulated. The relationship graph enlists all the components in the digital twin and an indication of which particular component is related to which other component functionally. For example, in a wind turbine, the brake has an effect on the drive shaft in a wind turbine (if the brake is applied, the shaft cannot rotate).

At step 506, the one or more components of the complex digital twin are segmented into one or more segments based on the determined relationships. Herein, the one or more segments comprises a subset of the one or more components of the complex digital twin that are functionally related to each other. It is to be understood that the relationship graph only determines how each of the components are related to each other physically and behaviorally. Then, in this step 506 it is further determined which one or more components that are related to each other can be grouped together to define a segment. In an embodiment, the method of segmenting the one or more components of the complex twin into one or more segments based on the determined relationships comprises identifying one or more primary segments from the one or more segments based on at least one of: a profile of the user, one or more requirements of the user, viewing angle of the user, and interaction of the user with the digital twin. In an example, the one or more primary segments are determined based on what user would like to view which can be determined from the viewing angle of the associated user device. In another example, the primary segments are determined based on the requirement provided by the user to view a particular component and an impact of the component. In another example, the primary segments are determined based on a profile of the user, i.e. if the user is a service engineer for turbine blades, then the primary segments are selected such that only the affected blades are rendered to the user.

At step 508, each of the one or more segments are simulated using a set of operating parameters for determining the behavior of the one or more components in the segments for rendering in the computer simulated environment. Once the one or more primary segments are determined from step 506, the one or more primary segments are simulated based on the set of operating parameters for determining the behavior of the one or more components in the primary segment with other components or other primary segments. It is to be understood that each of the components in the primary segment may impact a behavior of the other components in the digital twin also. Therefore, the method comprises observing a behavior of segments other than the primary segments to be rendered when a particular simulation is running and determining one or more secondary segments based on a behavioral variation that are impacted from the simulation running in the primary segments. The one or more secondary segments comprises the components that are not directly requested by the user or related to each other but are the components that will have an impact when the components of the primary segments are operational. It should be understood that the method proposes dynamic discovery of other components that are affected by the operation of components in the primary segment. For example, if the rotor blades in the wind turbine have to be investigated then it may also be related to the motor, and hence the motor is identified as the secondary segment.

At step 510, the one or more segments are rendered in the computer simulated environment based on the simulation and one or more requirements of the user viewing the complex digital twin in the computer simulated environment. It will be appreciated that the entire complex digital twins are not rendered for viewing, rather the one or more segments of the digital twin that are relevant for the user for a particular activity are rendered for effective viewing and understanding of the machinery rendered as the digital twin. The method comprises defining access to one or more components of the complex digital twin based on predefined user roles in the industrial environment. The user roles are predefined in the industrial environment based on the requirements of the users. The different user role may be owners/administrators, operators, technical staff, consumers, etc. In an example, owners/administrators have full control and management of the digital twins, operators have permissions to monitor, maintain, and update the digital twins, and consumers have limited interaction and view-only access to the digital twins. The method comprises providing access rights to different user roles based on the requirements and permissions granted. The one or more components are rendered to the user based on the access provided for different user roles. Advantageously, access control mechanisms are employed to enforce such access level permissions in the computer simulated environment.

Further, the method of rendering the one or more segments in the computer simulated environment comprises generating, an accurate representation of the one or more segments based on primary segments, secondary segments, and an access level of the user profiles. The term accurate representation as used herein can be understood as the one or more components to be rendered to the user based on identified primary segments and secondary segments after verification that the components in the identified primary segments and the secondary segments are allowed to be accessed by the user based on his user profile. The method further comprises rendering the accurate representation for the users to view the one or more components in the computer simulated environment.

The present invention proposes a new technique called dynamic functional segmentation for digital twins aimed at reducing the resource requirements for virtual experiences in the industrial metaverse. It relies on the belief that for most use cases, users in the metaverse focus on specific components or parts rather than entire complex models. For example, in a remote assistance scenario wherein a fault occurs in the yaw motor of a wind turbine, we do not need to render or observe the blades or other parts. However, there might be other components which can directly or indirectly affect the functioning of the yaw motor. The proposed technique relies on identifying such clusters of components and rendering them to the user. We call the process of isolating such clusters of components in a digital twin based on functionality as functional segmentation and this is performed dynamically based on the current simulation or user behaviour. Advantageously, the present invention provides a technique for dynamic segmentation of complex digital twins and makes them easy to render. Furthermore, the present invention reduces the resource requirements for rendering/visualizing complex use cases. Even complex models can be rendered efficiently as it segments the models to generate specific perception. It is to be noted that only the focused components that are identified using functional segmentation and dynamic segmentation are rendered in detail while the others are not, thereby making the proposed method resource efficient and energy efficient. Furthermore, the proposed invention enhance user experience by rendering only relevant part of the complex digital twins to the user as required by the user.

While the invention has been illustrated and described in detail with the help of a preferred embodiment, the invention is not limited to the disclosed examples. Other variations can be deducted by those skilled in the art without leaving the scope of protection of the claimed invention.

### List of references

- 100: system
- 102: digital twin
- 104A, 104B, 104C: one or more components
- 106: communication network
- 108: apparatus
- 202: user
- 204: user device
- 302: one or more processing units
- 304: memory unit
- 306: module
- 308: component identification module
- 310: relationship identification module
- 312: segmentation module
- 314: simulation module
- 316: rendering module
- 318: storage unit
- 320: database
- 322: input unit
- 324: output unit
- 326: bus
- 400: system for dynamically segmenting complex digital twins for rendering one or more components of the complex digital twin in a computer simulated environment
- 500: method for dynamically segmenting complex digital twins for rendering one or more components of the complex digital twin in a computer simulated environment

## Claims

1. A method (500) for dynamically segmenting complex digital twins (102, 402) for rendering one or more components (102A, 102B, 102C, 404A, 404B, 404C) of the complex digital twin in a computer simulated environment, the method comprising:
identifying, by a processing unit (302), the one or more components (102A, 102B, 102C, 404A, 404B, 404C) in the complex digital twin (102, 402) associated with assets in an industrial environment, wherein the complex digital twins are a virtual replica of the assets;
determining, by the processing unit (302), a relationship between the one or more identified components (102A, 102B, 102C, 404A, 404B, 404C) based on an impact of a behavior of the one or more components when operational using an artificial intelligence model;
segmenting, by the processing unit (302), the one or more components (102A, 102B, 102C, 404A, 404B, 404C) of the complex digital twin into one or more segments based on the determined relationships, wherein the one or more segments comprises a subset of the one or more components of the complex digital twin that are functionally related to each other;
simulating, by the processing unit, each of the one or more segments using a set of operating parameters for determining the behavior of the one or more components in the segments for rendering in the computer simulated environment;
rendering, by the processing unit, the one or more segments in the computer simulated environment based on the simulation and one or more requirements of a user (202) viewing the complex digital twin in the computer simulated environment.

2. The method (500) according to claim 1, wherein relationship between the one or more identified components (102A, 102B, 102C, 404A, 404B, 404C) is determined based on relationship graph generated from the one or more components and functional relationship therebetween.

3. The method (500) according to any of the claims 1 or 2, wherein segmenting the one or more components (102A, 102B, 102C, 404A, 404B, 404C) of the complex twin (102, 402) into one or more segments based on the determined relationships comprises:
identifying, by the processing unit, one or more primary segments from the one or more segments based on at least one of: a profile of the user (202), one or more requirements of the user, viewing angle of the user, and interaction of the user with the digital twin (102, 402).

4. The method (500) according to claim 1, further comprising:
observing, by the processing unit (302), a behavior of segments other than the primary segments to be rendered when a particular simulation is running;
determining, by the processing unit, one or more secondary segments based on a behavioral variation that are impacted from the simulation running in the primary segments.

5. The method (500) according to any of the preceding claims, further comprises defining access to one or more components (102A, 102B, 102C, 404A, 404B, 404C) of the complex digital twin (102, 402) based on predefined user roles in the industrial environment.

6. The method (500) according to any of the preceding claims, wherein rendering the one or more segments in the computer simulated environment comprises:
generating, by the processing unit (302), an accurate representation of the one or more segments based on primary segments, secondary segments, and an access level of the user profiles;
rendering, by the processing unit, the accurate representation for the users to view the one or more components (102A, 102B, 102C, 404A, 404B, 404C) in the computer simulated environment.

7. An apparatus (108) for dynamically segmenting complex digital twins for rendering one or more components (102A, 102B, 102C, 404A, 404B, 404C) of the complex digital twin (102, 402) in the computer simulated environment, the apparatus (108) comprising:
one or more processing units (302); and
a memory (304) communicatively coupled to the one or more processing units (302), the memory (304) comprising a module (306) stored in the form of machine-readable instructions executable by the one or more processing units (302), wherein the module is configured to perform the method (400) steps according to claims 1 to 6.

8. A system (100) for dynamically segmenting complex digital twins for rendering one or more components (102A, 102B, 102C, 404A, 404B, 404C) of the complex digital twin (102, 402) in the computer simulated environment, the system comprising:
a computer simulated environment hosting a plurality of digital twins (102, 402), wherein each of the digital twins correspond to one or more assets in an industrial environment; and
an apparatus (106) according to claim 7, communicatively coupled to the computer simulated environment, wherein the wherein the apparatus (106) is configured for dynamically segmenting complex digital twins (102, 402) for rendering one or more components (102A, 102B, 102C, 404A, 404B, 404C) of the complex digital twin in the computer simulated environment, according to any of the method claims 1 to 6.

9. A computer-program product, having computer-readable instructions stored therein, that when executed by a processing unit (302), cause the processing unit (302) to perform method (400) steps according to any of the claims 1 to 6.

10. A computer readable medium on which program code sections of a computer program are saved, the program code sections being loadable into and/or executable in a system to make the system execute the method steps according to any of the claims 1 to 6 when the program code sections are executed in the system.
